# EUROPEAN PATENT APPLICATION

(11) **EP 2 477 197 A1**
(43) Date of publication of application: **18.07.2012**
(21) Application number: 10815139.0
(22) Date of filing: 08.09.2010
(51) Int. Cl.: H01F 5/00, H01F 38/14, H05B 6/12, H05B 6/36

(54) **ELECTROMAGNETIC INDUCTION COIL UNIT AND ELECTROMAGNETIC INDUCTION DEVICE**

(30) Priority: 11.09.2009 JP 2009210081
(71) Applicant: Panasonic Corporation, Kadoma-shi Osaka 571-8501 (JP)
(72) Inventor: MIYASHITA, Norihiro, 2-1-61 Shiromi Chuo-ku, Osaka 540-6207 (JP); FUJITA, Atsushi, 2-1-61 Shiromi Chuo-ku, Osaka 540-6207 (JP)
(74) Representative: Schwabe - Sandmair - Marx
(86) International application number: PCT/JP2010/005494
(87) International publication number: WO 2011/030539

(57) **Abstract**

In order to provide an electromagnetic induction coil unit and an electromagnetic induction device with reduced coil loss and high power transmission efficiency, and hence whose manufacturing costs are reduced, what is included is a coil (101) formed with a spiral conductor, and a magnetic partition wall (102) formed with a spiral magnetic element and disposed so as to sandwich at least a part of the spiral conductor of the coil (101).

## Description

### Technical Field

The present invention relates to an electromagnetic induction device that uses principles of electromagnetic induction. In particular, the present invention relates to an electromagnetic induction coil unit that is employed for, e.g., an induction heating device, a wireless tag, a contactless charging device and the like that are used at homes, restaurants, factories and the like.

### Background Art

In recent years, induction heating devices represented by induction heating cookers are in widespread use at homes. Generally, a heating coil that is used for a conventional induction heating cooker is structured with a litz wire made of some tens of stranded fine copper wires, in order to reduce the skin effect and to suppress loss of the heating coil (refer to Patent Literature 1, for example). Further, as a coil structure being simple and cost effective without any use of litz wire, what is discussed is a structure using a planar coil, which can be manufactured by subjecting a metal plate to punching (refer to Patent Literature 2, for example).

### Citation List

### Patent Literatures

Patent Literature 1: Japanese Unexamined Patent Publication No. 9-245949
Patent Literature 2: Japanese Unexamined Patent Publication No.2002-75613

### Summary of Invention

### Technical Problem

However, is the case where the heating coil is structured with a litz wire in a conventional induction heating cooker as described above, since fine enameled wires are stranded to be the product, there is a problem of expensive manufacturing costs. Though the structure with a planar coil facilitates manufacture and achieves cost effectiveness, it is associated with great coil loss as compared to the structure with a litz wire. Therefore, there is a problem in terms of performance in that heat generation of the heating coil becomes great and efficiency reduces. Accordingly, use of a planar coil as the heating coil in induction heating cookers is not practiced.

In consideration of the problems associated with the conventional electromagnetic induction devices described above, an object of the present invention is to provide a highly reliable electromagnetic induction coil unit in which an electromagnetic induction coil employed for an electromagnetic induction device using principles of electromagnetic induction achieves a reduction in coil loss, high power transmission efficiency, and a reduction in manufacturing costs; and to provide an electromagnetic induction device capable of efficiently transmitting power using the electromagnetic induction coil unit, and achieving a reduction in manufacturing costs.

### Solution to Problem

In order to solve the problems in the conventional electromagnetic induction device and to achieve the object described above, the present invention is structured as follows.

An electromagnetic induction coil unit according to a first aspect of the present invention includes a coil that is formed with a spiral conductor, and a magnetic partition wall that is formed with a spiral magnetic element and that is disposed so as to sandwich at least part of the spiral conductor of the coil. The electromagnetic induction coil unit according to the first aspect of the present invention structured in this manner achieves reduced coil loss and high power transmission efficiency.

In an electromagnetic induction coil unit according to a second aspect of the present invention, the magnetic partition wall according to the first aspect may be disposed so as to sandwich the conductor by a predetermined length from a central-axis-side end of the coil. The electromagnetic induction coil unit according to the second aspect of the present invention structured in this manner achieves reduced coil loss and high power transmission efficiency.

An electromagnetic induction coil unit according to a third aspect of the present invention further includes, in the first or second aspect, a dielectric element for holding the coil. The electromagnetic induction coil unit according to the third aspect of the present invention structured in this manner can easily be manufactured. Further, the highly reliable electromagnetic induction coil unit is provided, and assembly to the electromagnetic induction device can be facilitated.

An electromagnetic induction coil unit according to a fourth aspect of the present invention may further include an outer circumferential magnetic partition wall which is disposed so as to cover an outer circumference of the coil according to the first or second aspect. The electromagnetic induction coil unit according to the fourth aspect of the present invention structured in this manner can prevent leakage of the magnetic field to the outside. Thus, the highly reliable electromagnetic induction coil unit can be provided.

In an electromagnetic induction coil unit according to a fifth aspect of the present invention, it is preferable that the magnetic partition wall according to the first or second aspects is structured with a magnetic element whose relative permeability is 5 or more and 1000 or less. The electromagnetic induction coil unit according to the fifth aspect of the present invention structured in this manner can surely suppress an increase in the coil resistance due to the proximity effect, and can realize high power transmission efficiency.

In an electromagnetic induction coil unit according to a sixth aspect of the present invention, the magnetic partition wall according to the second aspect may be disposed so as to sandwich the conductor falling within a range from 25% to 75% of a total number of turns of the coil from the central-axis-side end of the coil. The electromagnetic induction coil unit according to the sixth aspect of the present invention structured in this manner can suppress an increase in the coil resistance due to the proximity effect, and can realize high power transmission efficiency.

In an electromagnetic induction coil unit according to a seventh aspect of the present invention, in the first or second aspect, it is preferable that a dimension of the magnetic partition wall in a direction of the central axis of the coil is greater than a dimension of the coil in the direction of the central axis, and a surface of the coil opposing in the direction of the central axis is disposed on an inner side by 1.5 mm or more from a surface of the magnetic partition wall opposing in the direction of the central axis. The electromagnetic induction coil unit according to the seventh aspect of the present invention structured in this manner can surely suppress an increase in the coil resistance due to the proximity effect, and can realize high power transmission efficiency.

In an electromagnetic induction coil unit according to an eighth aspect of the present invention, the magnetic partition wall according to the first or the second aspect may have a multi-turn structure having a gap penetrating in a direction of the central axis of the coil. The electromagnetic induction coil unit according to the eighth aspect of the present invention structured in this manner can enhance the magnetic shield effect exhibited by the magnetic partition wall.

In an electromagnetic induction coil unit according to a ninth aspect of the present invention, the coil according to the first or second aspect may have a multilayer structure layered in a direction of the central axis of the coil. The electromagnetic induction coil unit according to the ninth aspect of the present invention structured in this manner can realize high output and high power transmission efficiency.

In an electromagnetic induction coil unit according to a tenth aspect of the present invention, in the first or second aspect, a dielectric element is added to the coil to have a shunt capacitance. The electromagnetic induction coil unit according to the tenth aspect of the present invention structured in this manner can prevent the effect of loss of the lead wire connected to the electromagnetic induction coil unit.

In an electromagnetic induction coil unit according to an eleventh aspect of the present invention, in the first or second aspect, a shunt capacitance may be connected to both ends of the coil. The electromagnetic induction coil unit according to the eleventh aspect of the present invention structured in this manner can prevent the effect of loss of the lead wire connected to the electromagnetic induction coil unit.

An electromagnetic induction device according to a twelfth aspect of the present invention includes the electromagnetic induction coil unit according to any one of the first to eleventh aspects, an inverter circuit which supplies high frequency power to the coil of the electromagnetic induction coil unit, and a matching circuit which matches the coil and the inverter circuit. The electromagnetic induction device according to the twelfth aspect of the present invention structured in this manner implements a device with high power transmission efficiency and low manufacturing costs.

### Advantageous Effects of Invention

The present invention can provide a highly reliable electromagnetic induction coil unit with low coil loss, high power transmission efficiency, and reduced manufacturing costs, and an electromagnetic induction device with high power transmission efficiency and reduced manufacturing costs.

### Brief Description of Drawings

Fig. 1 is a diagram showing a schematic structure of an electromagnetic induction device of a first embodiment according to the present invention.
Fig. 2 is a perspective view showing a structure of an electromagnetic induction coil unit used for an induction heating device of the first embodiment according to the present invention.
Fig. 3 is a plan view showing a structure of the electromagnetic induction coil unit used for the induction heating device of the first embodiment according to the present invention.
Fig. 4 is a cross-sectional view of the electromagnetic induction coil unit used for the induction heating device of the first embodiment according to the present invention.
Fig. 5 is a graph showing the relationship among relative permeability of a magnetic partition wall, coil resistance [mΩ], and power transmission efficiency [%] in the induction heating device of the first embodiment according to the present invention.
Fig. 6 is a graph showing the relationship among the number of turns from the center of the magnetic partition wall, coil resistance [mΩ], and power transmission efficiency [%] in the induction heating device of the first embodiment according to the present invention.
Fig. 7 is a graph showing the relationship among distance [mm] between the coil and an object to be heated, coil resistance [mΩ], and power transmission efficiency [%] in the induction heating device of the first embodiment according to the present invention.
Fig. 8 is a circuit diagram showing an exemplary structure of a matching circuit connected to a coil of the electromagnetic induction coil unit in the induction heating device of the first embodiment according to the present invention.
Fig. 9 is a circuit diagram showing another exemplary structure of the matching circuit of the first embodiment according to the present invention.
Fig. 10 is a circuit diagram showing another exemplary structure of the matching circuit of the first embodiment according to the present invention.
Fig. 11 is a cross-sectional view of the structure of an electromagnetic induction coil unit in an electromagnetic induction device of a second embodiment according to the present invention.
Fig. 12 is a diagram showing a vehicle and others in which a contactless charging device having the electromagnetic induction coil unit of the present invention is installed.

### Description of Embodiments

Hereinafter, with reference to the accompanying drawings, a description will be given of an example in which an electromagnetic induction coil unit is used as a heating coil for an induction heating device, as embodiments of an electromagnetic induction coil unit of the present invention. It is to be noted that, the electromagnetic induction coil unit of the present invention is not limited to the structure applied as the heating coil of the induction heating device described in each of the following embodiments, but includes any electromagnetic induction coil unit for an electromagnetic induction device structured based on a technical idea equivalent to the technical idea described in each of the following embodiments and the common general technical knowledge in the present technical field.

### (First Embodiment)

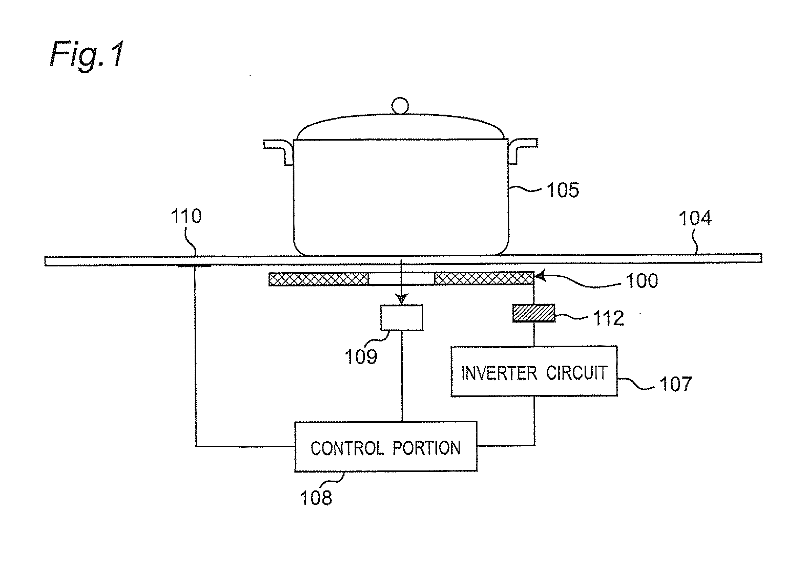

Fig. 1 is a diagram showing the schematic structure of an induction heating device as an electromagnetic induction device according to a first embodiment using an electromagnetic induction coil unit of the present invention. As shown in Fig. 1, the induction heating device according to the first embodiment includes a top plate 104 on which an object 105 to be heated is placed, an electromagnetic induction coil unit 100 as a heating coil disposed immediately under the heating region of the top plate 104, an inverter circuit 107 that supplies high frequency power to the electromagnetic induction coil unit 100, a matching circuit 112 that matches impedance between the electromagnetic induction coil unit 100 and the inverter circuit 107, and a control portion 108 that controls drive of the inverter circuit 107. The induction heating device according to the first embodiment further includes constituents which are provided to a general induction heating device, such as a temperature sensor 109 which detects infrared radiation emitted from the to-be-heated object 105 to sense the temperature of the to-be-heated object 105, and an operation portion 110 provided at the top plate 104. Based on a sense signal from the temperature sensor 109, a manipulation signal from the operation portion 110, an output signal of the inverter circuit 107 and the like, the control portion 108 controls drive of the inverter circuit 107 to supply high frequency current to the electromagnetic induction coil unit 100, to thereby heat the to-be-heated object 105 to a desired state.

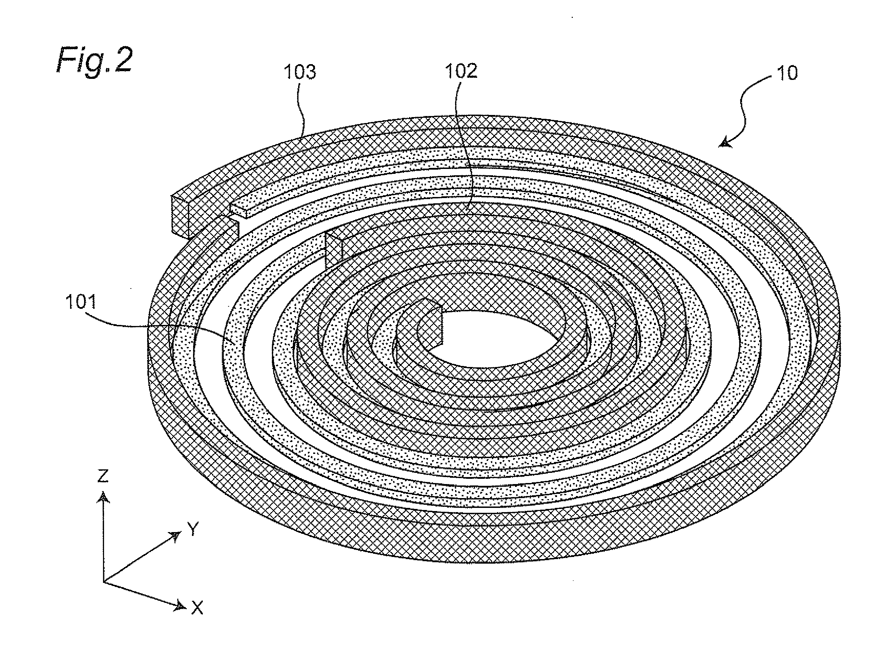

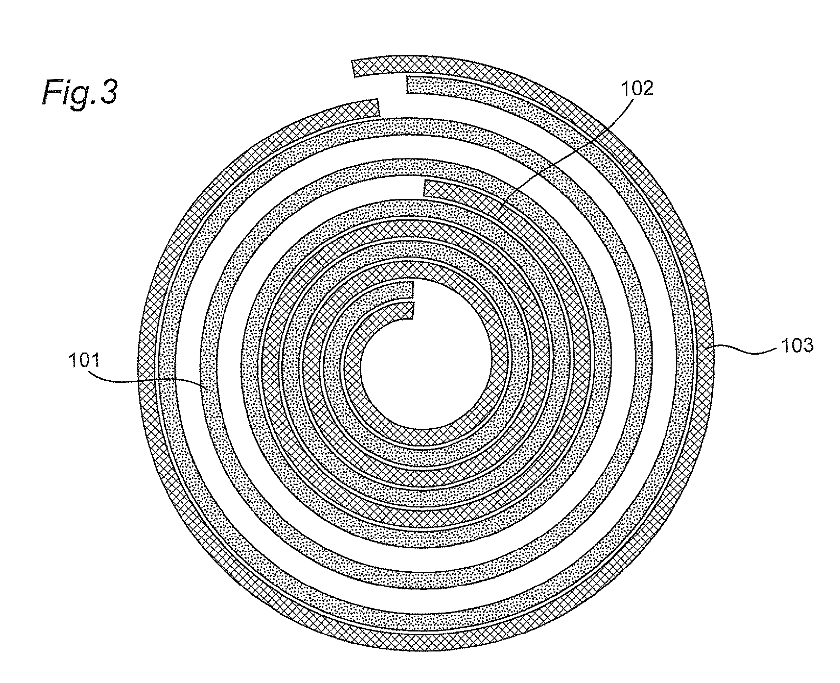

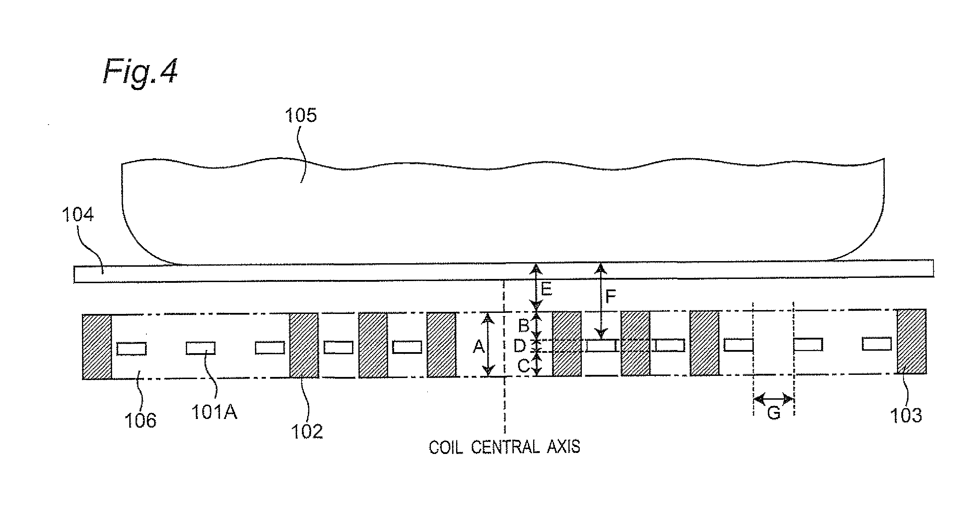

Fig. 2 is a perspective view showing a structure of the electromagnetic induction coil unit 100 used for the induction heating device according to the first embodiment of the present invention. The arrows X, Y and Z shown in Fig. 2 are coordinate axes that represent three axes, namely, X axis, Y axis, and Z axis in Fig. 2. Fig. 3 is a plan view showing a structure of the electromagnetic induction coil unit 100, in which the electromagnetic induction coil unit 100 in X-Y axes plane is shown. Fig. 4 is a cross-sectional view of the electromagnetic induction coil unit 100 and the like taken along Z axis direction.

The electromagnetic induction coil unit 100 includes a coil 101 formed with a conductor, e.g., copper material, having a substantially planar spiral shape. Further, the coil 101 may not necessarily be a solid wire whose cross section is rectangular as shown in Fig. 4, and can adopt a variety of cross sectional shapes such as circular, oval and the like. The coil 101 is not limited to a solid wire, and may be structured with a litz wire, which is made of stranded solid wires.

The coil 101 is supplied with high frequency power from the inverter circuit 107, to generate a high frequency magnetic field. The coil 101 generating the magnetic field in this manner inductively heats the to-be-heated object 105 through the top plate 104 structured with an electrically insulating material.

As shown in Fig. 4, the electromagnetic induction coil unit 100 is provided with, in addition to the coil 101, a magnetic partition wall 102, an outer circumferential magnetic partition wall 103, and a dielectric element 106. The magnetic partition wall 102 is a magnetic element (ferrite) having a substantially planar spiral shape, and disposed so as to be interposed in the conductor of the spiral coil 101. The outer circumferential magnetic partition wall 103 is a magnetic element (ferrite) disposed so as to cover the circumference of the coil 101. Provision of the outer circumferential magnetic partition wall 103 prevents leakage of the magnetic field to the outside of the coil 101.

The dielectric element 106 is formed with a dielectric material whose relative dielectric constant exceeds 1, and is attached to the coil 101. Though the dielectric element 106 according to the first embodiment is described in the exemplary manner in which the dielectric element 106 entirely covers the coil 101 as shown in cross-sectional view of Fig. 4, it is not necessary for the dielectric element 106 to entirely cover the coil 101. The structure in which the dielectric element 106 is attached to a part of the coil 101 so as to be capable of retaining the shape of the coil 101 will suffice. Exemplary structure may be the coil 101 being placed on the spirally formed dielectric element 106, or part of the coil 101 being sandwiched by the dielectric element 106.

A description will be given of an operation of the electromagnetic induction coil unit in the induction heating device according to the first embodiment of the present invention structured as described above.

Since the coil 101 is a spiral conductor, when a current is allowed to flow through the coil 101, the magnetic field is focused near the central axis of the coil 101. Accordingly, near the central axis of the coil 101, the proximity effect occurs as being influenced by the magnetic field distribution generated by the coil 101. Specifically, the current distribution across the cross section of the conductor in the coil 101 (cross section taken along Z axis direction) becomes biased toward the central axis, and the resistance of the coil 101 increases. By the magnetic partition wall 102 being interposed in the conductor of the coil 101, the magnetic field focuses on the magnetic partition wall 102. Therefore, the current flowing through the coil 101 is not influenced by the magnetic field distribution generated by the coil 101. Thus, the proximity effect can be suppressed and an increase in the resistance of the coil 101 can be prevented. That is, the magnetic partition wall 102 serves as the magnetic shield.

### [Permeability of Magnetic partition wall 102]

Next, a description will be given of details of the magnetic partition wall 102.

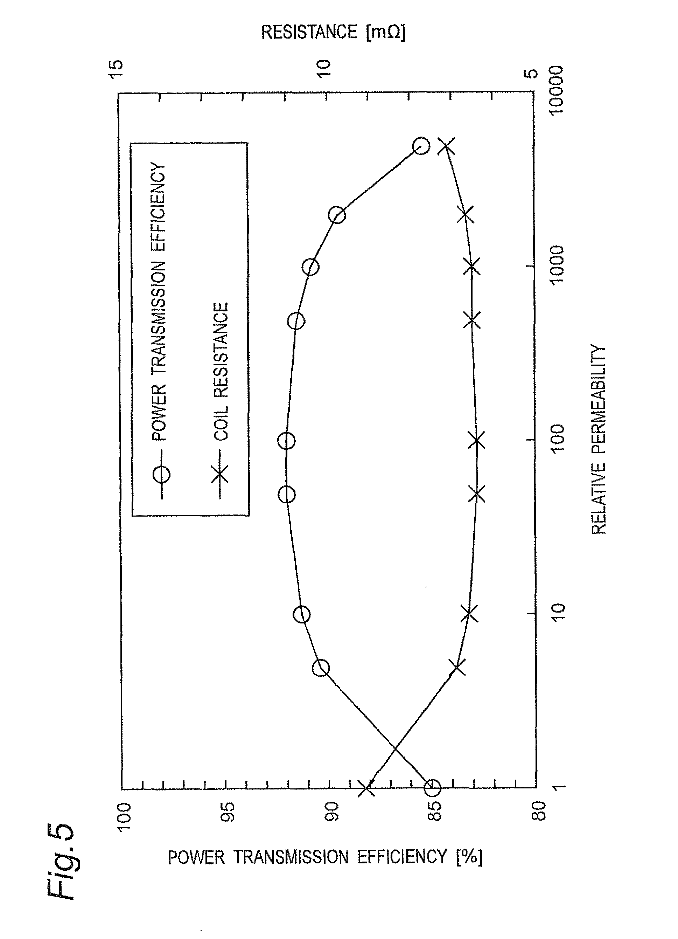

First, a description will be given of the permeability of the magnetic partition wall 102. Fig. 5 is a graph showing the relationship among relative permeability of the magnetic partition wall 102, resistance [mΩ] of the coil 101, and power transmission efficiency [%]. The graph shown in Fig. 5 is a calculation result where the number of turns of the coil 101 is 5. In this calculation, the magnetic partition wall 102 is interposed in the entire region of the coil 101 1 (inter-conductor region).

In the graph of Fig. 5, the power transmission efficiency is the proportion of the power transmitted to the to-be-heated object 105 to the power input to the power coil 101. In the graph shown in Fig. 5, the power transmission efficiency in the relative permeability of the magnetic partition wall 102 is represented by non-filled circles (o), and the resistance of the coil 101 in the relative permeability of the magnetic partition wall 102 is represented by crosses (×).

As shown in the graph of Fig. 5, as the relative permeability of the magnetic partition wall 102 is increased from 1, the proximity effect is alleviated by the magnetic partition wall 102, whereby the resistance of the coil 101 reduces, and the power transmission efficiency increases. When the relative permeability is around 100, the power transmission efficiency becomes maximum. However, when the relative permeability exceeds 100, the magnetic coupling with the to-be-heated object 105, e.g., a pot or a pan, weakens and, therefore, the power transmission efficiency gradually reduces. In order to secure the power transmission efficiency by 90% or more, the relative permeability of the magnetic partition wall 102 must be set to a range from 5 or more and 1000 or less.

### [Region Where Magnetic partition wall 102 is to be Interposed]

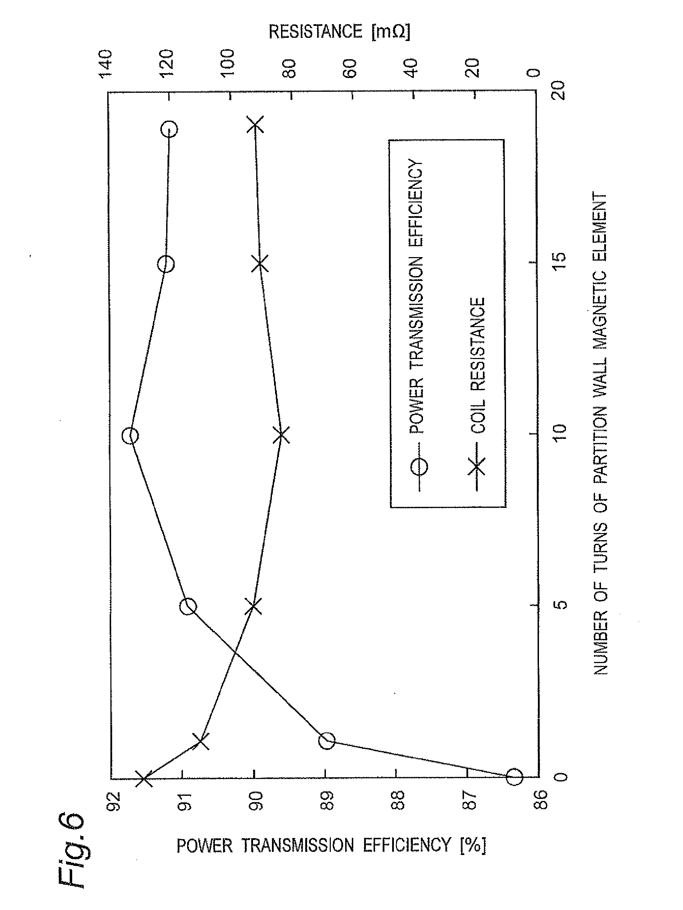

Next, a description will be given of the region where the magnetic partition wall 102 is to be interposed. As shown in Figs. 2 and 3, the magnetic partition wall 102 is interposed along the inner side of the coil 101 by a predetermined length from the central-axis-side end of the coil 101 toward the outer side. With the electromagnetic induction coil unit 100 shown in Figs. 2 and 3, the magnetic partition wall 102 is interposed up to the inter-conductor region where the number of turns of the coil 101 is 3 from the central axis of the coil 101. The magnetic partition wall 102 becomes a spiral shape where the number of turns is 3. Fig. 6 is a graph showing the relationship among the number of turns from the center of the magnetic partition wall 102, the resistance of the coil 101 [mΩ], and the power transmission efficiency [%]. The graph shown in Fig. 6 is the experimental result where the number of turns of the coil 101 is 19. The power transmission efficiency shown in Fig. 6 is the same as the power transmission efficiency shown in Fig. 5, and is the proportion of the power transmitted to the to-be-heated object 105 to the power input to the coil 101. In Fig. 6, the power transmission efficiency in connection with the number of turns of the magnetic partition wall 102 is represented by non-filled circles (o), and the resistance of the coil 101 in connection with the number of turns of the magnetic partition wall 102 is represented by crosses (x).

As shown in the graph of Fig. 6, in the region where the number of turns of the magnetic partition wall 102 is 0 to 10, the resistance of the coil 101 reduces as the number of turns increases, and the power transmission efficiency increases. In the graph shown in Fig. 6, when the number of turns of the magnetic partition wall 102 is 10, which is approximately half as great as the number of turns (19) of the coil 101, the power transmission efficiency becomes maximum. However, when the number of turns of the magnetic partition wall 102 exceeds 10, the magnetic coupling with the to-be-heated object 105, e.g., a pot or a pan, weakens and, therefore, the power transmission efficiency gradually reduces. From this result, it can be understood that the magnetic partition wall 102 is preferably interposed in the inter-conductor region falling within a range spanning 1/4 (25%) to 3/4 (75%) of the number of turns of the coil 101 from the central axis of the coil 101. In particular, it is further preferable that the magnetic partition wall 102 is interposed near the inter-conductor region falling within a range from the central axis of the coil 101 to half the turns of the coil 101, that is, in the region falling within a range spanning 40% to 60% of the number of turns of the coil 101.

### [Dimension of Magnetic partition wall 102]

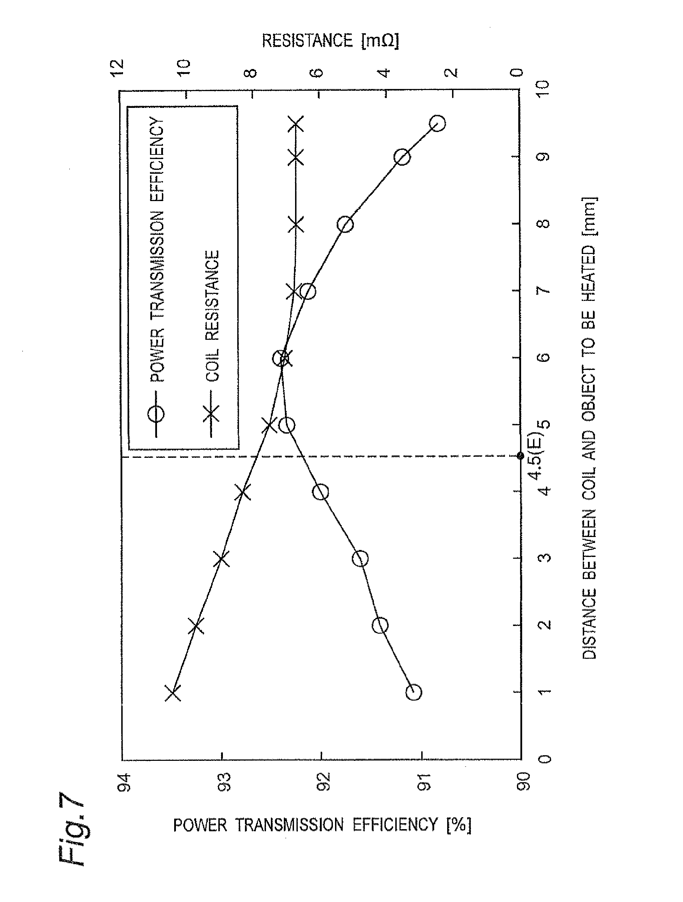

Next, a description will be given of the dimension of the magnetic partition wall 102. Fig. 7 is a graph showing the relationship among the distance [mm] between the coil 101 and the to-be-heated object 105, the resistance [mΩ] of the coil 101, and the power transmission efficiency [%]. The graph shown in Fig. 7 is the calculation result obtained when the number of turns of the coil 101 is 5 and a distance E (see Fig. 4) between the front surface (the plane facing the top plate 104) of the magnetic partition wall 102 and the to-be-heated object 105 is fixed to 4.5 mm and a distance F between the front surface (the plane facing the top plate 104) of the coil 101 and the to-be-heated object 105 is varied (1 to 10 mm). In this calculation, the magnetic partition wall 102 is interposed in the entire region of the coil 101.

In the graph of Fig. 7, the power transmission efficiency is the proportion of the power transmitted to the to-be-heated object 105 to the power input to the coil 101. In Fig. 7, the power transmission efficiency in connection with the distance between the coil 101 and the to-be-heated object 105 is represented by non-filled circles (o), and the resistance of the coil 101 in connection with the distance between the coil 101 and the to-be-heated object 105 is represented by crosses (×).

As shown in the graph of Fig. 7, as the distance between the coil 101 and the to-be-heated object 105 becomes shorter than 10 mm, the magnetic coupling between them is enhanced, whereby the power transmission efficiency increases. However, when the distance between the coil 101 and the to-be-heated object 105 becomes shorter than 6 mm, the effect of suppressing the proximity effect by the magnetic shield of the magnetic partition wall 102 is gradually lost, and degradation of the power transmission efficiency progresses. Accordingly, it can be understood that the coil 101 is preferably disposed on the inner side by 1.5 mm or more from the front surface of the magnetic partition wall 102 in order to suppress the proximity effect by the magnetic partition wall 102, because the distance E (see Fig. 4) between the magnetic partition wall 102 and the to-be-heated object 105 is fixed to 4.5 mm. Accordingly, as shown in Fig. 4, the thickness dimension A of the magnetic partition wall 102 is set to be greater than the thickness dimension D of the coil 101. Further, it is preferable to set the distance B between the front surface (the plane facing the top plate 104) of the magnetic partition wall 102 and the front surface (the plane facing the top plate 104) of the coil 101 to 1.5 mm or more. It can also be understood that the distance C between the back surface (the plane opposite to the front surface) of the magnetic partition wall 102 and the back surface (the plane opposite to the front surface) of the coil 101 is preferably similarly set to 1.5 mm or more in order to suppress the proximity effect by the magnetic partition wall 102.

### [Structure of Magnetic partition wall 102]

Next, a description will be given of the structure of the magnetic partition wall 102. The magnetic partition wall 102 is spirally formed with a ferrite material, and is arranged along the inner side portion of the coil 101 by a predetermined number of turns from the central-axis-side end of the coil 101. As shown in Fig. 4, it is preferable that the thickness dimension A (the length in the direction of the central axis) of the magnetic partition wall 102 is greater than the thickness dimension D (the length in the direction of the central axis) of the coil 101, and that the magnetic partition wall 102 is disposed in close proximity to the top plate 104. In this manner, provision of the magnetic partition wall 102 enhances the effect of suppressing the proximity effect, and reduces the distance E from the to-be-heated object 105. Therefore, the magnetic coupling with the to-be-heated object 105 is enhanced, and the power transmission efficiency increases.

### [Structure of Coil 101]

A description will be given of the structure of the coil 101. In Fig. 4, it is preferable that the inter-conductor distance G of the coil 101 where the magnetic partition wall 102 is not interposed is as short as possible. Since the proximity effect is strongly exhibited near the central axis of the coil 101, the proximity effect is suppressed by inserting the magnetic partition wall 102. However, since the proximity effect is weakly exhibited to the coil 101 in the outer side region where the magnetic partition wall 102 is not interposed, the inter-conductor distance G can be shortened. Further, the conductor cross-sectional area of the coil 101 in the outer side region where the magnetic partition wall 102 is not interposed may widely be structured. In this manner, by widely structuring the conductor cross-sectional area of the coil 101 in the outer side region of the coil 101, the resistance of the coil 101 reduces, and the power transmission efficiency increases.

With the electromagnetic induction coil unit 100 in the induction heating device according to the first embodiment, the current flowing through the side surface of the coil 101 becomes extremely small, because of the magnetic field becoming weak due to the magnetic partition wall 102. As a result, the current flowing through the coil 101 is focused on the front surface and the back surface of the coil 101, whereby high power transmission efficiency can be exhibited.

Though the coil 101 of the electromagnetic induction coil unit 100 in the induction heating device according to the first embodiment has been described taking up the example in which the coil 101 1 is a solid wire whose conductor cross section is rectangular as shown in Figs. 2 to 4, the present invention is not limited to such a shape, and includes any conductor cross-sectional shape such as circular, oval and the like.

Further, the coil in the electromagnetic induction coil unit of the present invention is not limited to a solid wire, and it may be in a stranded wire structure such as a litz wire, which is formed by a plurality of stranded solid wires.

The number of turns of the coil of the electromagnetic induction coil unit of the present invention is not limited to the number of turns described in the first embodiment, and is set as appropriate in accordance with the specification of apparatus for which the electromagnetic induction coil unit is used. Though the shape of the coil 101 according to the first embodiment has been described as being circular, the shape of the coil of the present invention is not limited to a circular coil, and includes polygonal shapes such as a rectangular shape, a triangular shape and the like.

As has been described, the reason why the shape or the structure of the coil (101) in the electromagnetic induction coil unit of the present invention is not limited is because interposition of the magnetic partition wall in the conductor of the coil (10 1) suppresses the proximity effect in the coil.

The frequency of current input to the coil (101) does not affect suppression of the proximity effect by the magnetic partition wall (102). This is because the proximity effect is dependent on the inter-conductor distance, and not on the frequency. However, since the magnetic element generally incurs greater loss as the frequency is higher, it is desirable to use the magnetic element at frequencies falling within a range where the effect of loss is not invited.

Next, a description will be given of the impedance of the coil 101 according to the first embodiment. When the real part of the impedance of the coil 101 is extremely small because of the number of turns of the coil 101 being small or the like, the effect of the lead wire connecting between the coil 101 and the inverter circuit 107, the contact resistance of the terminal connecting between the lead wire and the coil 101, and the contact resistance between the lead wire and the terminal connecting the inverter circuit and the like becomes great, and the power transmission efficiency reduces. This is caused by a reduction in the proportion of the high frequency power output from the inverter circuit 107 being input to the coil 101. When the impedance of the coil 101 matches with the output impedance of the inverter circuit 107, the power which can be supplied to the coil 101 becomes maximum.

Accordingly, the impedance of the coil 101 must be increased to be as great as the real part of the output impedance of the inverter circuit 107.

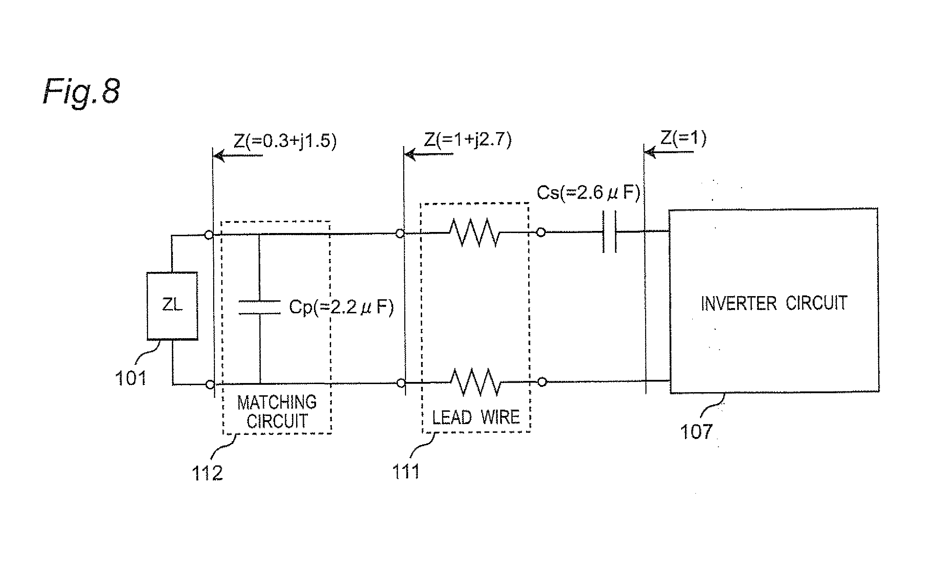

Fig. 8 is a circuit diagram showing an exemplary structure of the matching circuit 112 which is inserted between the coil 101 of the electromagnetic induction coil unit 100 and the inverter circuit 107 in the induction heating device according to the first embodiment. The matching circuit 112 is an exemplary case where: frequency is 23 kHz; impedance ZL of the coil 101 is 0.3 + j 1.5 Ω; and the output impedance of the inverter circuit 107 is 1 Ω. The matching circuit 112 having a shunt capacitance Cp of 2.2 µF is connected to the coil 101. Thus, the impedance is converted to 1 + j 2.7 Q. Subsequently, a series capacitance Cs of 2.6 µF is inserted between the matching circuit 112 and the inverter circuit 107. Thus, the coil 101 and the inverter circuit 107 can be matched with each other. By connecting the matching circuit 112 of the shunt capacitance Cp to the coil 101, to thereby increase the impedance real part of the coil 101 without any loss, the effect of the lead wire 111 can be avoided.

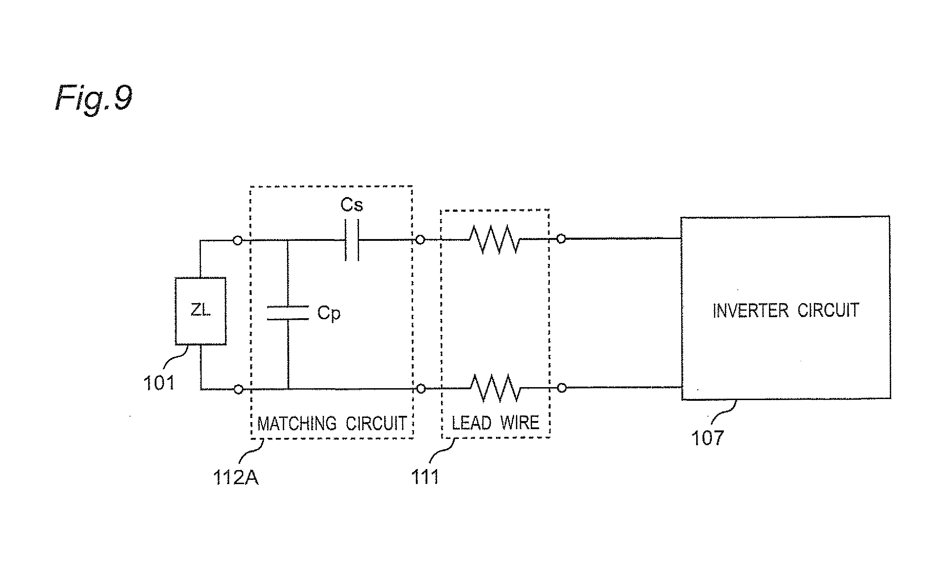

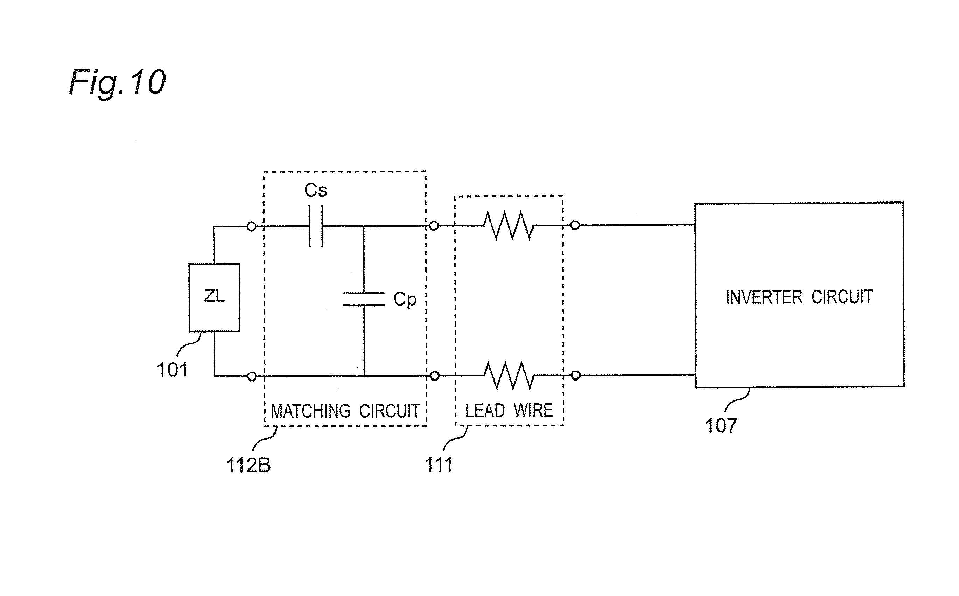

Figs. 9 and 10 are each a circuit diagram showing another exemplary structure of the matching circuit. As a matching circuit 112A shown in Fig. 9, the series capacitance Cs may be inserted between the lead wire 111 and the shunt capacitance Cp. Further, as a matching circuit 112B shown in Fig. 10, the series capacitance Cs may be inserted between the coil 101 and the shunt capacitance Cp.

It is to be noted that, as shown in Fig. 4, since the dielectric element 106 is attached to the coil 101 1 in the electromagnetic induction coil unit 100, the structure with which the parasitic capacitance generated at inter-conductor of the coil 101 can intentionally be increased is achieved, and the shunt capacitance can be added inside the structure of the electromagnetic induction coil unit 100. As a result, a reduction in the number of components as the matching circuit can be achieved.

As described above, by setting the parameters such as permeability, dimension, interposed region and the like of the magnetic partition wall 102 interposed in the coil 101 in the electromagnetic induction coil unit 100 in the electromagnetic induction device according to the first embodiment to optimum values, the proximity effect can effectively be suppressed and the coil loss can be reduced, whereby high power transmission efficiency can be realized. Since the electromagnetic induction coil unit 100 in the electromagnetic induction device according to the first embodiment can realize high power transmission efficiency, the coil structure can be simplified, and the manufacturing costs can further be reduced. As a result, the electromagnetic induction device according to the first embodiment implements a highly reliable apparatus with suppressed manufacturing costs and high power transmission efficiency.

### (Second Embodiment)

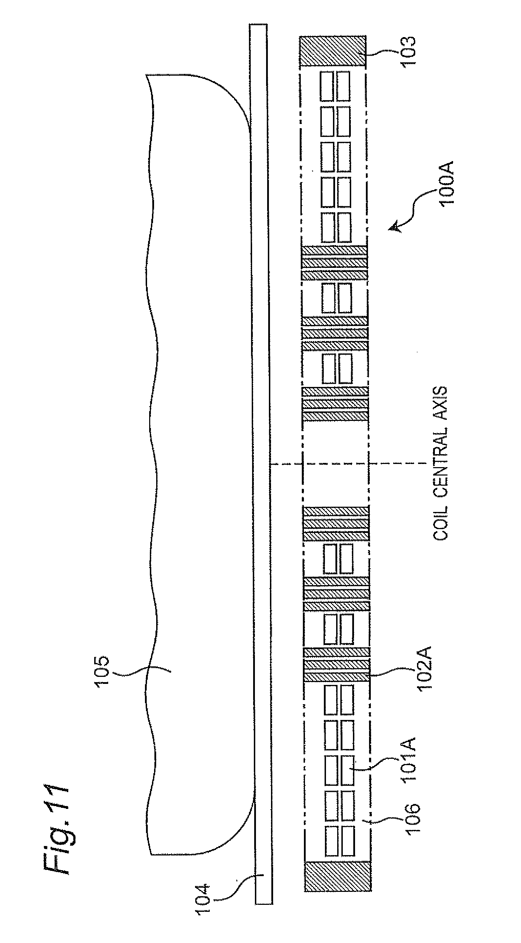

Next, with reference to Fig. 11, a description will be given of an electromagnetic induction device according to a second embodiment in which the electromagnetic induction coil unit of the present invention is used. Fig. 11 is a cross-sectional view showing the structure of an electromagnetic induction coil unit 100A in the electromagnetic induction device according to the second embodiment of the present invention.

The electromagnetic induction device according to the second embodiment is different from the induction heating device according to the first embodiment in the structure of the electromagnetic induction coil unit 100A, and the rest of the structure is identical to the induction heating device according to the first embodiment. Accordingly, in the description of the second embodiment, those constituents having the identical function and structure as in the first embodiment are denoted by identical reference characters, and the description given in the first embodiment will be applied thereto.

In the electromagnetic induction coil unit 100A according to the second embodiment includes, similarly to the electromagnetic induction coil unit 100 according to the first embodiment, a coil 101A, a magnetic partition wall 102A, an outer circumferential magnetic partition wall 103, and a dielectric element 106. The electromagnetic induction coil unit 100A according to the second embodiment is different from the first embodiment only in the structure of the coil 101A and the magnetic partition wall 102A, and the rest of the structure is identical.

### [Structure of Magnetic partition wall 102A]

A description will be given of the structure of the magnetic partition wall 102A according to the second embodiment.

As shown in Fig. 11, the substantially planar spiral coil 101A is a multilayer structure in which a plurality of coil-like elements are stacked in the top-bottom direction (the direction of the central axis of the coil 101A). The magnetic partition wall 102A is made up of a plurality of substantially planar spiral magnetic elements being overlaid on one another, with a gap between each ones of the magnetic elements. That is, the magnetic partition wall 102A according to the second embodiment has a multi-turn structure in which spiral magnetic elements are overlaid on one another, and similarly to the first embodiment, the magnetic partition wall 102A is interposed in the conductor of the coil 101A. The permeability of the magnetic partition wall 102A in the electromagnetic induction coil unit 100A according to the second embodiment, the number of turns of the coil 101A, and the positional relationship between the magnetic partition wall 102A and the coil 101A are identical to the electromagnetic induction coil unit 100 in the induction heating device according to the aforementioned first embodiment.

It is to be noted that, though the electromagnetic induction coil unit 100A shown in Fig. 11 shows an exemplary case where the coil 101A has a two-layer structure and the magnetic partition wall 102A has a three-turn structure, the present invention is not limited thereto, and is set as appropriate according to the specification or the like of the induction heating device. Accordingly, in the following description, the coil 101A is a multilayer structure made of two or more layers, and the magnetic partition wall 102A is a multi-turn structure made of two or more turns.

As shown in Fig. 11, the magnetic partition wall 102A is a multi-turn structure having gaps which penetrate in the direction of the central axis of the coil 101A. In this manner, by employing the multi-turn structure in which the magnetic partition wall 102A has the gaps, the magnetic shield effect enhances, and the effect of suppressing the proximity effect enhances. As a result of calculation using 5 as the number of turns of the coil 101A, by employing the gaps, the resistance of the coil 101A largely reduces, and the power transmission efficiency increases.

Since the coil 101A according to the second embodiment is the multilayer structure, the current flowing inside the cross section of the coil 101A becomes extremely small by the skin effect. The current flowing through the side surface of the coil 101A becomes extremely small, because of the magnetic field becoming weak due to the magnetic partition wall 102A. As a result, the current flowing through the coil 101A is focused on the front surface and the back surface of the coil 101A. Since the coil 101A has a multilayer structure, the current flows as being focused on the topmost layer surface (the top surface of the topmost layer in Fig. 11), and the back surface of the lowermost layer (the bottom surface of the lowermost layer in Fig. 11). Accordingly, even when the multilayer structure is employed for the coil 101A according to the second embodiment, the power transmission efficiency changes little.

It is to be noted that, in connection with the electromagnetic induction coil unit 100A in the induction heating device according to the second embodiment, the conditions such as permeability, dimension, interposed region and the like of the magnetic partition wall 102A interposed in the conductor of the coil 101A are identical to those described in the aforementioned first embodiment. Accordingly, by setting various parameters such as permeability, dimension, interposed region of the magnetic partition wall 102A interposed in the coil 101A in the electromagnetic induction coil unit 100A in the induction heating device according to the second embodiment to optimum values, the proximity effect can effectively be suppressed and the coil loss can be reduced, whereby high power transmission efficiency can be realized. Since the electromagnetic induction coil unit 100A in the electromagnetic induction device according to the second embodiment can realize high power transmission efficiency, the coil structure can be simplified, and the manufacturing costs can further be reduced. As a result, the electromagnetic induction device according to the second embodiment becomes a highly reliable apparatus with suppressed manufacturing costs and high power transmission efficiency.

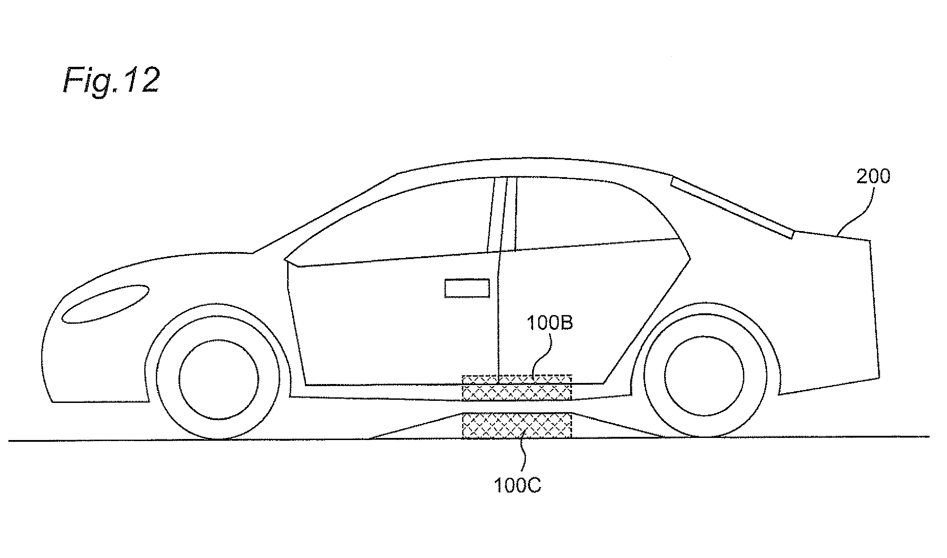

It is to be noted that, the electromagnetic induction coil unit of the electromagnetic induction device of the present invention can be applied to a contactless charging device. For example, an electromagnetic induction device is used as a contactless charging device used for charging the secondary battery of an electric vehicle (EV). As this electromagnetic induction device, the electromagnetic induction coil unit described in the foregoing embodiments can be used. Fig. 12 is a diagram showing a vehicle 200 having installed therein a contactless charging device having the electromagnetic induction coil unit of the present invention and a parking lot. In Fig. 12, the vehicle 200 is an electric vehicle (EV) and shown in a state of parking at the parking lot. As shown in Fig. 12, a first electromagnetic induction coil unit 100B is provided at the bottom of the body of the vehicle 200, and a second electromagnetic induction coil unit 100C is provided at the parking region of the parking lot where the vehicle 200 parks. The second electromagnetic induction coil unit 100C is projectively provided from the parking plane so as to be disposed in close proximity to the first electromagnetic induction coil unit 100B of the vehicle 200. The second electromagnetic induction coil unit 100C can be structured to rise when the vehicle 200 parks at a predetermined parking region and becomes ready to be charged, to shift to the position in close proximity to the first electromagnetic induction coil unit 100B.

In Fig. 12, the electromagnetic induction coil units (100B, 100C) provided to the vehicle 200 and the parking region, respectively have the similar structure as the electromagnetic induction coil unit described in the aforementioned first or second embodiment. At least one of the two electromagnetic induction coil units (100B, 100C) shown in Fig. 12 may be structured similarly to the electromagnetic induction coil unit described in the aforementioned first or second embodiment.

As has been described above, by applying the electromagnetic induction coil unit of the electromagnetic induction device of the present invention to a contactless charging device, and setting the parameters such as permeability, dimension, interposed region and the like of the magnetic partition wall interposed in the coil to optimum values, the proximity effect can effectively be suppressed and the coil loss can be reduced, whereby high power transmission efficiency can be realized.

### Industrial Applicability

The electromagnetic induction coil unit of the present invention can be applied not only to induction heating devices used at homes, restaurants, or factories, but also to any electromagnetic induction devices that use the principles of electromagnetic induction, such as wireless tags, contactless charging devices and the like.

### Reference Signs List

- 101: Coil
- 102: Magnetic partition wall
- 103: Outer circumferential magnetic partition wall
- 104: Top plate
- 105: Object to be heated
- 106: Dielectric element

## Claims

1. An electromagnetic induction coil unit, comprising:
a coil which is formed with a spiral conductor; and
a magnetic partition wall which is formed with a spiral magnetic element and which is disposed so as to sandwich at least a part of the spiral conductor of the coil.

2. The electromagnetic induction coil unit according to Claim 1, wherein
the magnetic partition wall is disposed so as to sandwich the conductor by a predetermined length from a central-axis-side end of the coil.

3. The electromagnetic induction coil unit according to Claim 1 or 2, further comprising
a dielectric element for holding the coil.

4. The electromagnetic induction coil unit according to Claim 1 or 2, further comprising
an outer circumferential magnetic partition wall which is disposed so as to cover an outer circumference of the coil.

5. The electromagnetic induction coil unit according to Claim 1 or 2, wherein
the magnetic partition wall is structured with a magnetic element whose relative permeability is 5 or more and 1000 or less.

6. The electromagnetic induction coil unit according to Claim 2, wherein
the magnetic partition wall is disposed so as to sandwich the conductor falling within a range spanning 25% to 75% of a total number of turns of the coil from the center-axis-side end of the coil.

7. The electromagnetic induction coil unit according to Claim 1 or 2, wherein
a dimension of the magnetic partition wall in a direction of the central axis of the coil is greater than a dimension of the coil in the direction of the central axis, and
a surface of the coil opposing in the direction of the central axis is disposed on an inner side by 1.5 mm or more from a surface of the magnetic partition wall opposing in the direction of the central axis.

8. The electromagnetic induction coil unit according to Claim 1 or 2, wherein
the magnetic partition wall has a multi-turn structure having a gap penetrating in a direction of the central axis of the coil.

9. The electromagnetic induction coil unit according to Claim 1 or 2, wherein
the coil has a multilayer structure layered in a direction of the central axis of the coil.

10. The electromagnetic induction coil unit according to Claim 1 or 2, wherein
a dielectric element is added to the coil to have a shunt capacitance.

11. The electromagnetic induction coil unit according to Claim 1 or 2, wherein
a shunt capacitance is connected to both ends of the coil.

12. An electromagnetic induction device, comprising:
the electromagnetic induction coil unit according to any one of Claims 1 to 11;
an inverter circuit which supplies high frequency power to the coil of the electromagnetic induction coil unit; and
a matching circuit which matches the coil and the inverter circuit.
